(19) Europäisches Patentamt
European Patent Office
Office européen des brevets

(11) **EP 3 311 639 B1**

(12) **EUROPÄISCHE PATENTSCHRIFT**

(45) Veröffentlichungstag und Bekanntmachung des Hinweises auf die Patenterteilung:
**31.07.2019   Patentblatt 2019/31**

(51) Int Cl.:
*A01B 59/00* *(2006.01)*     *A01B 59/06* *(2006.01)*

(21) Anmeldenummer: **17197240.9**

(22) Anmeldetag: **19.10.2017**

(54) **VERFAHREN ZUR BERECHNUNG CHARAKTERISTISCHER GEOMETRIE- UND/ODER STELLGRÖSSEN EINES DREIPUNKT-KRAFTHEBERS**

METHOD FOR CALCULATING CHARACTERISTIC GEOMETRY AND/OR THE ACTUATING VARIABLES OF A THREE POINT HYDRAULIC LIFT

PROCÉDÉ DE CALCUL DE GRANDEURS GÉOMÉTRIQUES ET/OU DE RÉGLAGE CARACTÉRISTIQUES D'UN RELEVAGE À TROIS POINTS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.10.2016   DE 102016220633**
            **23.11.2016   DE 102016223189**

(43) Veröffentlichungstag der Anmeldung:
**25.04.2018   Patentblatt 2018/17**

(73) Patentinhaber: **Deere & Company**
**Moline, IL 61265 (US)**

(72) Erfinder:
• **Kremmer, Martin**
 **68163 Mannheim (DE)**
• **Gresch, Valentin**
 **68163 Mannheim (DE)**

(74) Vertreter: **Dehnhardt, Florian Christopher**
**John Deere GmbH & Co. KG**
**Global Intellectual Property Services**
**John-Deere-Straße 70**
**68163 Mannheim (DE)**

(56) Entgegenhaltungen:
**EP-A1- 2 946 647     DE-B3- 10 350 651**

**Beschreibung**

Die Erfindung betrifft ein Verfahren zur Berechnung charakteristischer Geometrie- und/oder Stellgrößen eines Dreipunkt-Krafthebers eines landwirtschaftlichen Traktors. DE10350651B3 offenbart zum Beispiel ein Verfahren zur Längeneinstellung eines Oberlenkers.

Gängige landwirtschaftliche Traktoren weisen im Heck- oder Frontbereich angeordnete Dreipunkt-Kraftheber zur Anbringung landwirtschaftlicher Zusatz- oder Anbaugeräte auf. Um unterschiedlichen Gerätetypen bzw. Einsatzsituationen gerecht zu werden, erlauben diese eine Vielzahl von Einstellmöglichkeiten. Die korrekte Einstellung des Dreipunkt-Krafthebers wird in aller Regel vom Bediener von Hand vorgenommen und setzt entsprechende Praxiserfahrung im Umgang mit dem betreffenden landwirtschaftlichen Zusatz- oder Anbaugerät voraus. Gerade für ungeübte Bediener ist es daher schwierig, den korrekten Einstellzustand des Dreipunkt-Krafthebers richtig einzuschätzen.

Es ist daher Aufgabe der vorliegenden Erfindung, ein Verfahren der eingangs genannten Art anzugeben, das eine Berechnung charakteristischer Geometrie- und/oder Stellgrößen des Dreipunkt-Krafthebers und damit insbesondere eine bedienerunabhängige Erkennung bzw. Beurteilung des Einstellzustands des Dreipunkt-Krafthebers erlaubt.

Diese Aufgabe wird durch ein Verfahren mit den Merkmalen des Patentanspruchs 1 gelöst.

Das Verfahren zur Berechnung charakteristischer Geometrie- und/oder Stellgrößen eines Dreipunkt-Krafthebers eines landwirtschaftlichen Traktors sieht vor, dass von einer elektronischen Kontrolleinheit als erste Geometrie- und/oder Stellgröße eine Anbringungsposition einer mittels eines Hubarms verstellbaren Hubstrebe in einer von mehreren Aufnahmebohrungen, die in einem mittels der Hubstrebe verschwenkbaren Unterlenker ausgebildet sind, ermittelt wird, indem der Unterlenker durch Betätigung einer hydraulischen Steuerung des Traktors zunächst in eine horizontale Winkellage $\alpha = 0$ verbracht sowie mittels eines Positionssensors eine damit korrespondierende Position $P_x$, $P_z$ des Hubarms wie auch mittels eines zugehörigen Beschleunigungs- und/oder Drehratensensors eine damit korrespondierende Winkellage $\gamma$ der Hubstrebe gegenüber der Vertikalen erfasst wird, wobei von der Kontrolleinheit zur Ermittlung der Anbringungsposition der Hubstrebe am Unterlenker bestimmt wird, für welche der Aufnahmebohrungen eine geometrische Zwangsbedingung der Gestalt

$$\begin{pmatrix} U_{ix} \\ U_{iz} \end{pmatrix} = \begin{pmatrix} P_x \\ P_z \end{pmatrix} - a \begin{pmatrix} \sin\gamma \\ \cos\gamma \end{pmatrix}$$

erfüllt ist, in der $U_{ix}$, $U_{iz}$ die Lagekoordinaten der i-ten Aufnahmebohrung und a eine die Länge der Hubstrebe repräsentierende Variable bezeichnen.

Mit anderen Worten wird durch Einsetzen der möglichen Werte von $U_{ix}$, $U_{iz}$ ermittelt, für welche der zugehörigen Aufnahmebohrungen die geometrische Zwangsbedingung erfüllt ist. Da die geometrischen Verhältnisse des Dreipunkt-Krafthebers unabhängig von der tatsächlichen Länge $l_h$ der Hubstrebe, die vorliegend durch die unbekannte Variable a repräsentiert ist, lediglich eine einzige mögliche Lösung der durch die geometrische Zwangsbedingung gegebenen Geradengleichung zulassen, ist eine eindeutige Identifizierung der zur Anbringung der Hubstrebe benutzten Aufnahmebohrung möglich. Hierbei ist die Position $P_x$, $P_z$ des Hubarms vorzugsweise durch die Lagekoordinaten einer daran vorgesehenen Anlenkstelle der Hubstrebe wiedergegeben.

Üblicherweise sind an jedem der beiden Unterlenker jeweils zwei nebeneinander in Richtung der Unterlenkerlängsachse angeordnete Aufnahmebohrungen vorgesehen, sodass sich für jede der beiden möglichen Anbringungspositionen unterschiedliche Schwenkbereiche der Unterlenker für den Fall ergeben, dass die Hubarme verstellt werden.

Die aktuelle Anbringungsposition kann dem Bediener insbesondere über ein in einer Fahrerkabine des landwirtschaftlichen Traktors angeordnetes Bedienerterminal mitgeteilt werden, wobei bei Kenntnis des am Dreipunkt-Kraftheber angebrachten Gerättyps bzw. - modells zusätzlich Einstellhinweise über eine gegebenenfalls zu verändernde Anbringungsposition der Hubstreben gegeben werden können.

Ausgehend von der ermittelten Anbringungsposition der Hubstrebe am Unterlenker kann nun als zweite Geometrie- und/oder Stellgröße die tatsächliche bzw. momentane Länge $l_h$ der Hubstrebe bestimmt werden. Hierzu werden die Lagekoordinaten $U_{jx}$, $U_{jz}$ der als belegt identifizierten Aufnahmebohrung in die geometrische Zwangsbedingung eingesetzt, um diese anschließend nach der Variablen a, mit $a = l_h$, aufzulösen. Die Kenntnis der tatsächlichen Länge $l_h$ der Hubstrebe ist insbesondere dann von Bedeutung, wenn diese längenverstellbar ausgebildet ist. Hierzu umfasst die Hubstrebe üblicherweise zwei gegenüberliegende Befestigungsabschnitte, die sich mittels einer Gewindespindel bzw. einem daran ausgebildeten gegenläufigen Gewinde gegeneinander verschieben lassen, wobei ein erster Befestigungsabschnitt an dem Hubarm und ein zweiter Befestigungsabschnitt an dem Unterlenker angebracht ist. Hierbei sei angemerkt, dass es sich anstelle einer derartigen mechanischen Hubspindel ebenso gut um eine hydraulisch längenverstellbare Hubstrebe handeln kann.

Des Weiteren kann als dritte Geometrie- und/oder Stellgröße eine Anbringungsposition eines längenverstellbaren Oberlenkers in einer von mehreren Aufnahmebohrungen einer traktorseitigen Befestigungsstelle von der Kontrolleinheit ermittelt werden, wozu der Oberlenker bei angebrachtem landwirtschaftlichen Zusatz- oder Anbaugerät zunächst in eine seiner beiden Endstellungen verbracht sowie mittels zugehöriger Beschleunigungs- und/oder Drehratensensoren einerseits die Winkellage $\alpha$ des Unterlenkers und andererseits eine Winkellage $\beta$ des Oberlenkers jeweils gegenüber der Horizontalen ermittelt wird, um ausgehend von einer in der Endstellung vorliegenden Länge $l_o = \hat{l}_o$ des Oberlenkers, einer Länge $l_u$ des Unterlenkers und einer Position $U_x$, $U_z$ einer traktorseitigen Anlenkstelle des Unterlenkers für jede der möglichen Anbringungspositionen des Oberlenkers an der traktorseitigen Befestigungsstelle eine Masthöhe $m_i$, die einen Abstand zwischen einer Oberlenkerkupplungsstelle und einer Unterlenkerkupplungsstelle zur Anbringung des landwirtschaftlichen Zusatz- oder Anbaugeräts wiedergibt, zu ermitteln,

$$m_i = \sqrt{\left(M_{ix} - U_{kx}\right)^2 + \left(M_{iz} - U_{kz}\right)^2} \quad,$$

mit

$$\begin{pmatrix} M_{ix} \\ M_{iz} \end{pmatrix} = \begin{pmatrix} O_{ix} \\ O_{iz} \end{pmatrix} + \hat{l}_o \begin{pmatrix} -\cos\beta \\ \sin\beta \end{pmatrix} \quad,$$

$$\begin{pmatrix} U_{kx} \\ U_{kz} \end{pmatrix} = \begin{pmatrix} U_x \\ U_z \end{pmatrix} + l_u \begin{pmatrix} -\cos\alpha \\ \sin\alpha \end{pmatrix} \quad,$$

wobei $M_{ix}$, $M_{iz}$ eine die Position einer Oberlenkerkupplungsstelle repräsentierende Variable, $U_{kx}$, $U_{kz}$ die Position einer Unterlenkerkupplungsstelle und $O_{ix}$, $O_{iz}$ die Lagekoordinaten der i-ten Aufnahmebohrung an der traktorseitigen Befestigungsstelle sind. Anschließend wird die Stellung des Hubarms verändert und die Berechnung der Masthöhe $m_i$ von der Kontrolleinheit für jede der möglichen Anbringungspositionen des Oberlenkers an der traktorseitigen Befestigungsstelle wiederholt, um aus der Menge der jeweils für die Masthöhe $m_i$ berechneten Ergebnisse diejenigen auszuwählen, die aufgrund ihrer Übereinstimmung auf die vom Oberlenker belegte Aufnahmebohrung an der traktorseitigen Befestigungsstelle hinweisen. Sollte die Lösung mehrdeutig sein, so wird die Stellung des Hubarms erneut verändert und die vorstehende Berechnung der Masthöhe $m_i$ von der Kontrolleinheit für jede der möglichen Anbringungspositionen des Oberlenkers an der traktorseitigen Befestigungsstelle ein weiteres Mal durchgeführt. Die in den beiden Berechnungen übereinstimmenden Ergebnisse repräsentieren dann die korrekte Lösung $m_j$.

Die vorstehend erwähnte Endstellung des Oberlenkers entspricht hierbei dessen vollständig aus- bzw. eingefahrenem Zustand, wobei die zugehörigen Längen $\hat{l}_o = l_{o,max}$ bzw. $\hat{l}_o = l_{o,min}$ ausgehend von den Spezifikationen des verwendeten Oberlenkers bekannt sind, sodass diese zur Ermittlung der Anbringungsposition des Oberlenkers vorteilhaft zur Verfügung steht.

Im Allgemeinen sind an der traktorseitigen Befestigungsstelle drei übereinander angeordnete Aufnahmebohrungen vorgesehen, wobei die aktuelle Anbringungsposition dem Bediener über das in der Fahrerkabine des landwirtschaftlichen Traktors angeordnete Bedienerterminal mitgeteilt werden kann. Wie schon im Falle der Ermittlung der Anbringungsposition der Hubstreben an den Unterlenkern, können auch hier bei Kenntnis des am Dreipunkt-Kraftheber angebrachten Gerättyps bzw. -modells zusätzlich Einstellhinweise über eine gegebenenfalls zu verändernde Anbringungsposition des Oberlenkers gegeben werden.

Ausgehend von der ermittelten Anbringungsposition des Oberlenkers an der traktorseitigen Befestigungsstelle kann nun von der Kontrolleinheit ohne Weiteres als vierte Geometrie- und/oder Stellgröße der Betrag der zugehörigen Masthöhe $m_j$ ermittelt werden,

$$m_j = \sqrt{\left(M_{jx} - U_{kx}\right)^2 + \left(M_{jz} - U_{kz}\right)^2} \quad.$$

Der Oberlenker kann nun in eine von der Endstellung abweichende Arbeitsposition verbracht werden, wobei von der Kontrolleinheit als fünfte Geometrie- und/oder Stellgröße die Länge $l_o$ des Oberlenkers in der Arbeitsposition durch Auflösen einer quadratischen Gleichung der Form

$$m_j^2 = \sqrt{\left(U_{kx} - O_{jx} + l_o \cos\beta\right)^2 + \left(U_{kz} - O_{jz} - l_o \sin\beta\right)^2} \quad,$$

mit

$$\begin{pmatrix} U_{kx} \\ U_{kz} \end{pmatrix} = \begin{pmatrix} U_x \\ U_z \end{pmatrix} + l_u \begin{pmatrix} -\cos\alpha \\ \sin\alpha \end{pmatrix} \quad ,$$

$$\begin{pmatrix} O_{kx} \\ O_{kz} \end{pmatrix} = \begin{pmatrix} O_{jx} \\ O_{jz} \end{pmatrix} + l_o \begin{pmatrix} -\cos\beta \\ \sin\beta \end{pmatrix} \quad ,$$

bestimmt werden kann, wobei $\alpha$ die Winkellage des Unterlenkers sowie $\beta$ die Winkellage des Oberlenkers jeweils gegenüber der Horizontalen, $U_{kx}$, $U_{kz}$ die Position der Unterlenkerkupplungsstelle und $O_{jx}$, $O_{jz}$ die Lagekoordinaten der vom Oberlenker belegten Aufnahmebohrung an der traktorseitigen Befestigungsstelle sind.

Die quadratische Gleichung weist zwei Lösungen auf, wobei die korrekte Lösung für $l_o$ im Lösungsraum $[l_{o,min}, l_{o,max}]$ liegen muss. Sollten die beiden Lösungen insoweit nicht eindeutig sein, besteht die Möglichkeit, die Position des Hubarms zu verändern sowie die vorstehende Berechnung für $l_o$ erneut durchzuführen, um aus der Menge der Lösungen diejenigen auszuwählen, die aufgrund ihrer Übereinstimmung auf die tatsächliche Länge $l_o$ des Oberlenkers hinweisen.

Abweichend davon kann auch der Verlauf der Winkellage $\beta = \beta\,(l_o)$ des Oberlenkers gegenüber der Horizontalen beim Verfahren des Oberlenkers aus der Endstellung in Richtung der Arbeitsposition beurteilt werden. Der Verlauf der Winkellage $\beta(l_o)$ weist über den gesamten Verstellbereich gesehen einen Scheitelpunkt auf, wobei die korrekte Lösung für $l_o$ zwischen der betreffenden Endstellung und dem Scheitelpunkt liegt.

Zusammenfassend handelt es sich also bei den berechneten charakteristischen Stell- und/oder Geometriegrößen des Dreipunkt-Geräteanbaus um die Anbringungsposition der Hubstrebe am Unterlenker, die momentane Länge $1_h$ der Hubstrebe, die Anbringungsposition des Oberlenkers an der traktorseitigen Befestigungsstelle, die Masthöhe $m_j$ des Dreipunkt-Geräteanbaus bei angebrachtem landwirtschaftlichen Zusatz- oder Anbaugerät, und die momentane Länge $l_o$ des Oberlenkers. Die hierfür erforderlichen Ausgangsgrößen $\alpha$, $\beta$, $\gamma$, $P_x$, $P_z$ können mit wenigen, in aller Regel am Dreipunkt-Kraftheber ohnehin vorhandenen Sensoren, wie solchen zur Winkel- und Positionsmessung, erfasst werden. Die übrigen Parameter $U_x$, $U_z$, $U_{ix}$, $U_{iz}$, $U_{kx}$, $U_{kz}$, $O_{ix}$, $O_{iz}$, $l_u$, $l_{o,max}$, $l_{o,min}$ ergeben sich aus den baulichen Gegebenheiten des verwendeten Dreipunkt-Krafthebers und werden als bekannt vorausgesetzt.

Die von der Kontrolleinheit berechneten Stell- und/oder Geometriegrößen des Dreipunkt-Krafthebers können insbesondere zur Erkennung möglicher Fehleinstellungen seitens des Bedieners sowie zur Ausgabe von Einstellempfehlungen über eine mit der Kontrolleinheit in Verbindung stehende Bedienerschnittstelle herangezogen werden. Daneben ist deren Nutzung für die Zwecke einer mittels des Dreipunkt-Krafthebers automatisiert durchgeführten Lage- bzw. Neigungsregelung des landwirtschaftlichen Zusatz- oder Anbaugeräts denkbar, wobei in diesem Fall weitere Größen, wie beispielsweise georeferenzierte Positionsinformationen und dergleichen, Berücksichtigung finden können.

Das erfindungsgemäße Verfahren zur Berechnung charakteristischer Geometrie- und/oder Stellgrößen eines Dreipunkt-Krafthebers eines landwirtschaftlichen Traktors wird im Folgenden anhand der beigefügten Zeichnungen näher erläutert. Dabei sind hinsichtlich ihrer Funktion übereinstimmende bzw. vergleichbare Komponenten mit denselben Bezugszeichen gekennzeichnet. Es zeigen:

Fig. 1 ein Ausführungsbeispiel des erfindungsgemäßen Verfahrens in Form eines Flussdiagramms,

Fig. 2 eine schematische Darstellung eines Dreipunkt-Krafthebers an einem landwirtschaftlichen Traktor, mit einem daran angebrachten landwirtschaftlichen Zusatz- oder Anbaugerät,

Fig. 3 einen Bewegungsverlauf eines von dem Dreipunkt-Kraftheber gemäß Fig. 2 umfassten Oberlenkers beim Ein- und Ausfahren, und

Fig. 4 ein Diagramm, das den Verlauf der Winkellage $\beta$ des Oberlenkers gegenüber der Horizontalen in Abhängigkeit der Länge $l_o$ des Oberlenkers wiedergibt.

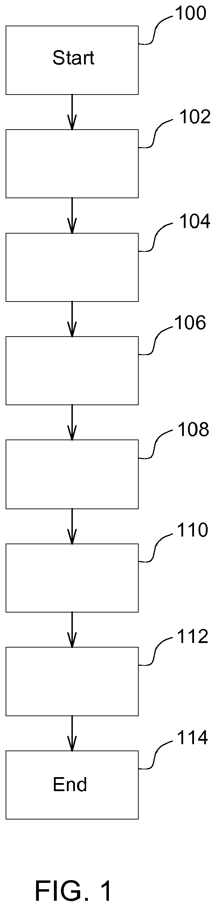

Fig. 1 zeigt ein Ausführungsbeispiel des erfindungsgemäßen Verfahrens in Form eines Flussdiagramms.

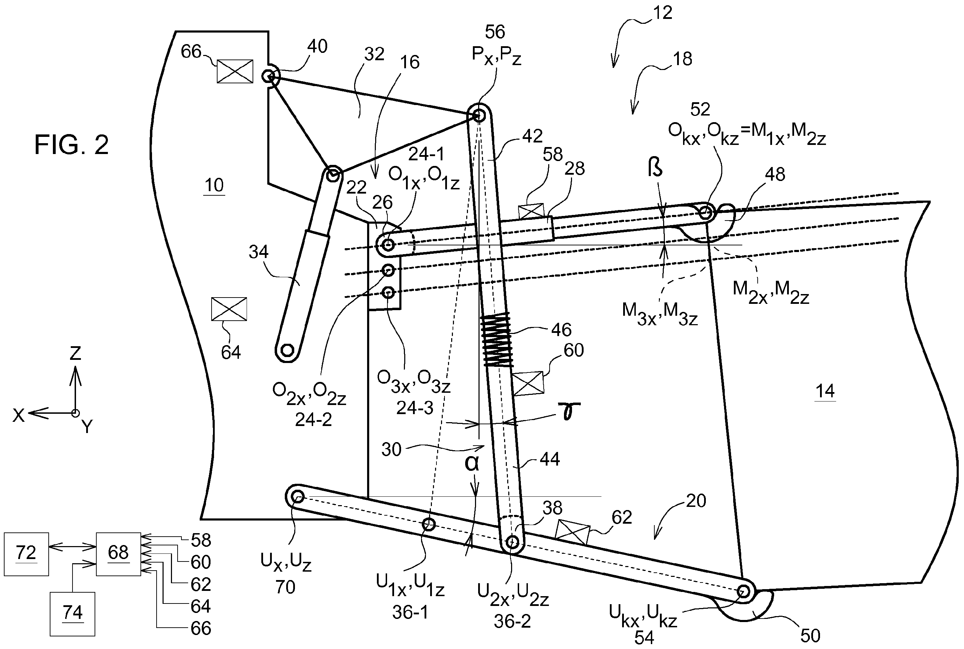

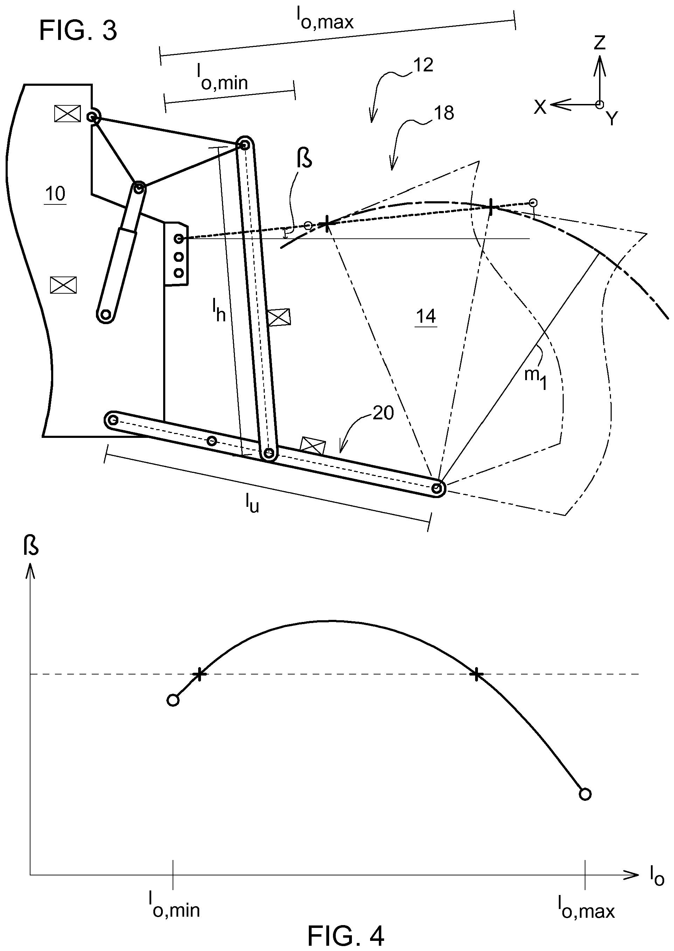

Zum besseren Verständnis des erfindungsgemäßen Verfahrens sowie der darin enthaltenen Berechnungsschritte soll zunächst auf die in Fig. 2 bzw. 3 wiedergegebene schematische Darstellung eines im Heckbereich eines landwirtschaftlichen Traktors 10 befindlichen Dreipunkt-Krafthebers 12 eingegangen werden. An dem Dreipunkt-Kraftheber 12 ist ein nicht näher spezifiziertes landwirtschaftliches Zusatz- oder Anbaugerät 14 angebracht. Bei diesem kann es sich um ein Spritzgestänge, einen Düngerstreuer, einen Kreiselschwader, einen Pflug oder ein beliebiges anderes Bodenbearbeitungsgerät handeln.

Der Dreipunkt-Kraftheber 12 ist von herkömmlicher Bauart und umfasst einen an einer traktorseitigen Befestigungsstelle 16 schwenkbar angebrachten Oberlenker 18 sowie an gegenüberliegenden Seiten des Dreipunkt-Krafthebers 12 schwenkbar angebrachte rechte und linke Unterlenker 20, von denen in Fig. 2 darstellungsbedingt lediglich einer von beiden sichtbar ist.

Bei der traktorseitigen Befestigungsstelle 16 handelt es sich um einen Befestigungsflansch 22. An dem Befestigungsflansch 22 sind drei übereinander angeordnete Aufnahmebohrungen 24-1, 24-2, 24-3 vorgesehen, an denen sich der Oberlenker 18 mittels eines an diesem ausgebildeten Befestigungsauges 26 von Hand anbringen lässt. Der Oberlenker 18 an sich ist längenverstellbar und umfasst zu diesem Zweck einen mit einer (nicht dargestellten) hydraulischen Steuerung des landwirtschaftlichen Traktors 10 kommunizierenden Hydraulikzylinder 28.

Die Unterlenker 20 sind über jeweilige Hubstreben 30 mit hydraulisch schwenkbaren Hubarmen 32 verbunden, wobei sich diese durch Betätigung der hydraulischen Steuerung des landwirtschaftlichen Traktors 10 mittels zugehöriger Hydraulikzylinder 34 heben und senken lassen. An jedem der beiden Unterlenker 20 sind jeweils zwei nebeneinander in Richtung der Unterlenkerlängsachse angeordnete Aufnahmebohrungen 36-1, 36-2 vorgesehen, an denen sich die Hubstrebe 30 mittels eines an dieser ausgebildeten Befestigungsauges 38 von Hand anbringen lässt. Die Hubarme 32 sind mittels einer Welle 40 drehfest verbunden, sodass eine von diesen an den Unterlenkern 20 hervorgerufene Schwenkbewegung synchron erfolgt.

Des Weiteren sind die Hubstreben 30 längenverstellbar ausgebildet. Hierzu umfasst jede der Hubstreben 30 zwei gegenüberliegende Befestigungsabschnitte 42, 44, die sich mittels einer Gewindespindel 46 bzw. einem daran ausgebildeten gegenläufigen Gewinde gegeneinander verschieben lassen, wobei ein erster Befestigungsabschnitt 42 an dem Hubarm 32 und ein zweiter Befestigungsabschnitt 44 an dem Unterlenker 20 angebracht ist.

Jeweils am Oberlenker 18 sowie an den Unterlenkern 20 vorgesehene Fanghaken 48, 50 erlauben ein Einrasten korrespondierender Befestigungspunkte des landwirtschaftlichen Zusatz- oder Anbaugeräts 14. Hierdurch werden eine entsprechende Oberlenkerkupplungsstelle 52 sowie entsprechende Unterlenkerkupplungsstellen 54 definiert.

Es sei an dieser Stelle angemerkt, dass die dargestellte Anzahl von Aufnahmebohrungen an der traktorseitigen Befestigungsstelle 16 bzw. dem Unterlenker 20 lediglich beispielhaften Charakter hat und sich das nachfolgend beschriebene Verfahren ebenso gut auch für den Fall einer beliebigen anderen Anzahl anwenden lässt.

Auch ist es denkbar, dass der Dreipunkt-Kraftheber 12 nicht im Heckbereich, sondern im Frontbereich des landwirtschaftlichen Traktors 10 angebracht ist. Die nachfolgenden Betrachtungen bei der Berechnung der charakteristischen Geometrie- und/oder Stellgrößen des Dreipunkt-Krafthebers 12, insbesondere in Bezug auf die insoweit eingehenden Ausgangsgrößen bzw. Parameter, sind dann gegebenenfalls entsprechend anzupassen.

Im vorliegenden Fall handelt es sich bei den verwendeten Ausgangsgrößen um eine Winkellage $\alpha$ der Unterlenker 20 gegenüber der Horizontalen x, eine Winkellage $\beta$ des Oberlenkers 18 gegenüber der Horizontalen x, eine Winkellage $\gamma$ der Hubstreben 30 gegenüber der Vertikalen z und eine Position $P_x$, $P_z$ der Hubarme 32, wobei diese durch die Lagekoordinaten einer daran vorgesehenen Anlenkstelle 56 der Hubstrebe 30 wiedergegeben ist.

Die Ermittlung der Winkellagen $\alpha$, $\beta$, $\gamma$ erfolgt auf Grundlage von mittels zugehöriger Beschleunigungs- und/oder Drehratensensoren 58, 60, 62 bereitgestellten Messdaten, die mit denjenigen eines traktorseitigen Beschleunigungs- und/oder Drehratensensors 64 in Bezug gesetzt werden. Des Weiteren ist ein Positionssensor 66 zur Bestimmung der Stellung der Hubarme 32 und damit der Position $P_x$, $P_z$ vorhanden. Die von den Sensoren 58, 60, 62, 64 und 66 bereitgestellten Messdaten werden hierbei einer elektronischen Kontrolleinheit 68 zur Auswertung zugeführt.

Das in der elektronischen Kontrolleinheit 68 ablaufende Verfahren zur Berechnung der charakteristischen Stell- und/oder Geometriegrößen soll nun unter Bezugnahme auf Fig. 1 eingehend erläutert werden.

Das Verfahren wird bei Inbetriebnahme des landwirtschaftlichen Traktors 10 und/oder auf Veranlassung eines Bedieners in einem Startschritt 100 initialisiert, woraufhin von der elektronischen Kontrolleinheit 68 eine Datenübertragungsverbindung zu den Sensoren 58, 60, 62, 64 und 66 aufgebaut wird.

In einem zweiten Schritt 102 wird als erste Geometrie- und/oder Stellgröße die Anbringungsposition der Hubstrebe 30 in einer der hierfür am Unterlenker 20 zur Verfügung stehenden Aufnahmebohrungen 36-1, 36-2 ermittelt. Hierzu wird der Unterlenker 20 durch Betätigung der hydraulischen Steuerung des landwirtschaftlichen Traktors 10 zunächst in eine horizontale Winkellage $\alpha = 0$ verbracht sowie die damit korrespondierende Position $P_x$, $P_z$ des Hubarms 32 wie auch die damit korrespondierende Winkellage $\gamma$ der Hubstrebe 30 gegenüber der Vertikalen z erfasst. Zur Ermittlung der Anbringungsposition der Hubstrebe 30 am Unterlenker 20 wird bestimmt, für welche der Aufnahmebohrungen 36-1, 36-2 eine geometrische Zwangsbedingung der Gestalt

$$\begin{pmatrix} U_{ix} \\ U_{iz} \end{pmatrix} = \begin{pmatrix} P_x \\ P_z \end{pmatrix} - a \begin{pmatrix} \sin\gamma \\ \cos\gamma \end{pmatrix} \qquad (1.1)$$

erfüllt ist, in der $U_{ix}$, $U_{iz}$ die Lagekoordinaten der i-ten Aufnahmebohrung (i = 1, 2) und a eine die Länge der Hubstrebe repräsentierende Variable bezeichnen.

Mit anderen Worten wird durch Einsetzen der möglichen Werte von $U_{ix}$, $U_{iz}$ ermittelt, für welche der zugehörigen Aufnahmebohrungen 36-1, 36-2 die geometrische Zwangsbedingung (1.1) erfüllt ist. Da die geometrischen Verhältnisse des Dreipunkt-Krafthebers 12 unabhängig von der tatsächlichen Länge $l_h$ der Hubstrebe 30, die vorliegend durch die unbekannte Variable a repräsentiert ist, lediglich eine einzige mögliche Lösung der durch die geometrische Zwangsbedingung (1.1) gegebenen Geradengleichung zulassen, ist eine eindeutige Identifizierung der zur Anbringung der Hubstrebe 30 benutzten Aufnahmebohrung möglich. Im vorliegenden Fall ergibt sich $U_{jx}$, $U_{jz}$ = $U_{2x}$, $U_{2z}$, sodass die Hubstrebe 30 also in der zweiten Aufnahmebohrung 36-2 am Unterlenker 20 angebracht ist.

In einem dritten Schritt 104 wird ausgehend von der im zweiten Schritt 102 ermittelten Anbringungsposition der Hubstrebe 30 am Unterlenker 20 als zweite Geometrie- und/oder Stellgröße die tatsächliche bzw. momentane Länge $l_h$ der Hubstrebe 30 bestimmt. Hierzu werden die Lagekoordinaten $U_{jx}$, $U_{jz}$ der als belegt identifizierten Aufnahmebohrung 36-2 in die geometrische Zwangsbedingung (1.1) eingesetzt, um diese anschließend nach der Variablen a, mit a = $l_h$, aufzulösen.

Des Weiteren wird in einem vierten Schritt 106 als dritte Geometrie- und/oder Stellgröße die Anbringungsposition des Oberlenkers 18 in den hierfür zur Verfügung stehenden Aufnahmebohrungen 24-1, 24-2, 24-3 der traktorseitigen Befestigungsstelle 16 ermittelt. Hierzu wird der Oberlenker 18 bei angebrachtem landwirtschaftlichen Zusatz- oder Anbaugerät 14 zunächst in eine seiner beiden Endstellungen verbracht sowie einerseits die Winkellage $\alpha$ des Unterlenkers 20 und andererseits die Winkellage $\beta$ des Oberlenkers 18 jeweils gegenüber der Horizontalen x ermittelt, um ausgehend von einer in der Endstellung vorliegenden Länge $l_o = \hat{l}_o$ des Oberlenkers 18, einer Länge $l_u$ des Unterlenkers 20 und einer Position $U_x$, $U_z$ einer traktorseitigen Anlenkstelle 70 des Unterlenkers 20 für jede der möglichen Anbringungspositionen des Oberlenkers 18 an der traktorseitigen Befestigungsstelle 16 eine Masthöhe $m_i$, die einen Abstand zwischen der Oberlenkerkupplungsstelle 52 und der Unterlenkerkupplungsstelle 54 zur Anbringung des landwirtschaftlichen Zusatz- oder Anbaugeräts 14 in Bezug auf die i-te Aufnahmebohrung (i = 1, 2, 3) wiedergibt, zu ermitteln,

$$m_i = \sqrt{\left(M_{ix} - U_{kx}\right)^2 + \left(M_{iz} - U_{kz}\right)^2} \quad , \qquad\qquad (1.2)$$

mit

$$\begin{pmatrix} M_{ix} \\ M_{iz} \end{pmatrix} = \begin{pmatrix} O_{ix} \\ O_{iz} \end{pmatrix} + \hat{l}_o \begin{pmatrix} -\cos\beta \\ \sin\beta \end{pmatrix} \quad ,$$

$$\begin{pmatrix} U_{kx} \\ U_{kz} \end{pmatrix} = \begin{pmatrix} U_x \\ U_z \end{pmatrix} + l_u \begin{pmatrix} -\cos\alpha \\ \sin\alpha \end{pmatrix} \quad ,$$

wobei $M_{ix}$, $M_{iz}$ eine die Position der Oberlenkerkupplungsstelle 50 repräsentierende Variable, $U_{kx}$, $U_{kz}$ die Position der Unterlenkerkupplungsstelle 52 und $O_{ix}$, $O_{iz}$ die Lagekoordinaten der i-ten Aufnahmebohrung an der traktorseitigen Befestigungsstelle 16 sind. Anschließend wird die Stellung des Hubarms 32 verändert und die Berechnung der Masthöhe $m_i$ für jede der möglichen Anbringungspositionen des Oberlenkers 18 an der traktorseitigen Befestigungsstelle 16 wiederholt, um aus der Menge der jeweils für die Masthöhe $m_i$ berechneten Ergebnisse diejenigen auszuwählen, die aufgrund ihrer Übereinstimmung auf die vom Oberlenker 18 belegte Aufnahmebohrung 24-1, 24-2, 24-3 an der traktorseitigen Befestigungsstelle 16 hinweisen. Sollte die Lösung mehrdeutig sein, so wird die Stellung des Hubarms 32 erneut verändert und die vorstehende Berechnung der Masthöhe $m_i$ für jede der möglichen Anbringungspositionen des Oberlenkers 18 an der traktorseitigen Befestigungsstelle 16 ein weiteres Mal durchgeführt. Die in den beiden Berechnungen übereinstimmenden Ergebnisse repräsentieren dann die korrekte Lösung $m_j$, im vorliegenden Fall $m_j = m_1$. Der Oberlenker 18 ist also in der ersten Aufnahmebohrung 24-1 an der traktorseitigen Befestigungsstelle 16 angebracht.

Die vorstehend erwähnte Endstellung des Oberlenkers 18 entspricht hierbei dessen vollständig aus- bzw. eingefahrenem Zustand, wobei die zugehörigen Längen $\hat{l}_o = l_{o,max}$ bzw. $\hat{l}_o = l_{o,min}$ ausgehend von den Spezifikationen des verwendeten Oberlenkers 18 bekannt sind.

Ausgehend von der im vierten Schritt 106 ermittelten Anbringungsposition des Oberlenkers 18 an der traktorseitigen Befestigungsstelle 16 wird in einem fünften Schritt 108 als vierte Geometrie- und/oder Stellgröße der Betrag der zugehörigen Masthöhe $m_j$ ermittelt,

$$m_j = \sqrt{\left(M_{jx} - U_{kx}\right)^2 + \left(M_{jz} - U_{kz}\right)^2} \quad . \qquad (1.3)$$

Der Oberlenker 18 wird anschließend in einem sechsten Schritt 110 in eine von der Endstellung abweichende Arbeitsposition verbracht, wobei als fünfte Geometrie- und/oder Stellgröße die Länge $l_o$ des Oberlenkers 18 in der Arbeitsposition durch Auflösen einer quadratischen Gleichung der Form

$$m_j^2 = \sqrt{\left(U_{kx} - O_{jx} + l_o \cos\beta\right)^2 + \left(U_{kz} - O_{jz} - l_o \sin\beta\right)^2} \quad , \qquad (1.4)$$

mit

$$\begin{pmatrix} U_{kx} \\ U_{kz} \end{pmatrix} = \begin{pmatrix} U_x \\ U_z \end{pmatrix} + l_u \begin{pmatrix} -\cos\alpha \\ \sin\alpha \end{pmatrix} \quad ,$$

$$\begin{pmatrix} O_{kx} \\ O_{kz} \end{pmatrix} = \begin{pmatrix} O_{jx} \\ O_{jz} \end{pmatrix} + l_o \begin{pmatrix} -\cos\beta \\ \sin\beta \end{pmatrix} \quad ,$$

bestimmt wird, wobei $O_{jx}$, $O_{jz}$ die Lagekoordinaten der vom Oberlenker 18 belegten Aufnahmebohrung 24-1 an der traktorseitigen Befestigungsstelle 16 sind.

Die quadratische Gleichung weist zwei Lösungen auf, wobei die korrekte Lösung für $l_o$ im Lösungsraum $[l_{o,min}, l_{o,max}]$ liegen muss. Sollten die beiden Lösungen insoweit nicht eindeutig sein, wird die Position des Hubarms 32 verändert sowie die vorstehende Berechnung für $l_o$ erneut durchgeführt, um aus der Menge der Lösungen diejenigen auszuwählen, die aufgrund ihrer Übereinstimmung auf die tatsächliche Länge $l_o$ des Oberlenkers 18 hinweisen.

Alternativ wird der Verlauf der Winkellage $\beta = \beta(l_o)$ des Oberlenkers 18 gegenüber der Horizontalen beim Verfahren des Oberlenkers 18 aus der Endstellung in Richtung der Arbeitsposition beurteilt, der sich aus dem in Fig. 3 dargestellten Bewegungsverlauf des Oberlenkers 18 beim Ein- und Ausfahren ergibt und in dem in Fig. 4 dargestellten Diagramm gezeigt ist. Wie zu erkennen ist, weist der Verlauf der Winkellage $\beta(l_o)$ über dessen Gesamtverstellbereich gesehen einen Scheitelpunkt auf, wobei die korrekte Lösung für $l_o$ hier zwischen der Endstellung und dem Scheitelpunkt liegt.

Die in den zweiten bis sechsten Schritten 102 bis 110 berechneten Stell- und/oder Geometriegrößen des Dreipunkt-Krafthebers 12 werden in einem siebten Schritt 112 zur Erkennung möglicher Fehleinstellungen seitens des Bedieners sowie zur Ausgabe von Einstellempfehlungen über eine mit der elektronischen Kontrolleinheit 68 in Verbindung stehende Bedienerschnittstelle 72 herangezogen. Bei der Bedienerschnittstelle 72 handelt es sich beispielsweise um ein im Bereich einer Bedienkonsole des landwirtschaftlichen Traktors 10 angeordneten berührungsempfindlichen Bildschirm. Daneben werden die berechneten Stell- und/oder Geometriegrößen für die Zwecke einer mittels des Dreipunkt-Krafthebers 12 automatisiert durchgeführten Lage- bzw. Neigungsregelung des landwirtschaftlichen Zusatz- oder Anbaugeräts 14 genutzt, wobei in diesem Fall weitere Größen, wie beispielsweise georeferenzierte Positionsinformationen und dergleichen, Berücksichtigung finden.

Bei den Größen $U_x$, $U_z$, $U_{ix}$, $U_{iz}$, $U_{kx}$, $U_{kz}$, $O_{ix}$, $O_{iz}$, $l_u$, $l_{o,max}$, $l_{o,min}$ handelt es sich um Parameter, die sich aus den baulichen Gegebenheiten des verwendeten Dreipunkt-Krafthebers 12 ergeben und daher als bekannt vorausgesetzt werden. Diese sind in einem mit der elektronischen Kontrolleinheit 68 kommunizierenden Speicher 74 abgelegt.

Anschließend wird das Verfahren in einem Schlussschritt 114 beendet.

## Patentansprüche

1. Verfahren zur Berechnung charakteristischer Geometrie- und/oder Stellgrößen eines Dreipunkt-Krafthebers eines landwirtschaftlichen Traktors, bei dem von einer elektronischen Kontrolleinheit (68) als erste Geometrie- und/oder Stellgröße eine Anbringungsposition einer mittels eines Hubarms (32) verstellbaren Hubstrebe (30) in einer von mehreren Aufnahmebohrungen (36-1, 36-2), die in einem mittels der Hubstrebe (30) verschwenkbaren Unterlenker (20) ausgebildet sind, ermittelt wird, indem der Unterlenker (20) durch Betätigung einer hydraulischen Steuerung des landwirtschaftlichen Traktors (10) zunächst in eine horizontale Winkellage $\alpha = 0$ verbracht sowie mittels eines Positionssensors (66) eine damit korrespondierende Position $P_x$, $P_z$ des Hubarms (32) wie auch mittels eines zugehörigen Beschleunigungs- und/oder Drehratensensors (62) eine damit korrespondierende Winkellage $\gamma$ der Hubstrebe (30) gegenüber der Vertikalen erfasst wird, wobei von der Kontrolleinheit (68) zur Ermittlung der Anbringungsposition der Hubstrebe (30) am Unterlenker (20) bestimmt wird, für welche der Aufnahmebohrungen (36-1, 36-2) eine geometrische Zwangsbedingung der Gestalt

$$\begin{pmatrix} U_{ix} \\ U_{iz} \end{pmatrix} = \begin{pmatrix} P_x \\ P_z \end{pmatrix} - a \begin{pmatrix} \sin\gamma \\ \cos\gamma \end{pmatrix}$$

erfüllt ist, in der $U_{ix}$, $U_{iz}$ die Lagekoordinaten der i-ten Aufnahmebohrung und $a$ eine die Länge der Hubstrebe (30) repräsentierende Variable bezeichnen.

2. Verfahren nach Anspruch 1, **dadurch gekennzeichnet, dass** die Hubstrebe (30) längenverstellbar ausgebildet ist, wobei von der Kontrolleinheit (68) ausgehend von der ermittelten Anbringungsposition der Hubstrebe (30) am Unterlenker (20) als zweite Geometrie- und/oder Stellgröße die momentane Länge $1_h$ der Hubstrebe (30) bestimmt wird, wozu die Lagekoordinaten $U_{jx}$, $U_{jz}$ der als belegt identifizierten Aufnahmebohrung (36-2) von der Kontrolleinheit (68) in die geometrische Zwangsbedingung eingesetzt werden, um diese anschließend nach der Variablen $a$, mit $a = l_h$, aufzulösen.

3. Verfahren nach Anspruch 1 oder 2, **dadurch gekennzeichnet, dass** als dritte Geometrie- und/oder Stellgröße von der Kontrolleinheit (68) eine Anbringungsposition eines längenverstellbaren Oberlenkers (18) in einer von mehreren Aufnahmebohrungen (24-1, 24-2, 24-3) einer traktorseitigen Befestigungsstelle (16) ermittelt wird, wozu der Oberlenker (18) bei angebrachtem landwirtschaftlichen Zusatz- oder Anbaugerät (14) zunächst in eine seiner beiden Endstellungen verbracht sowie mittels zugehöriger Beschleunigungs- und/oder Drehratensensoren (58, 60) einerseits die Winkellage $\alpha$ des Unterlenkers (20) und andererseits eine Winkellage $\beta$ des Oberlenkers (18) jeweils gegenüber der Horizontalen ermittelt wird, um ausgehend von einer in der Endstellung vorliegenden Länge $l_o = \hat{l}_o$ des Oberlenkers (18), einer Länge $l_u$ des Unterlenkers (20) und einer Position $U_x$, $U_z$ einer traktorseitigen Anlenkstelle (70) des Unterlenkers (20) für jede der möglichen Anbringungspositionen des Oberlenkers (18) an der traktorseitigen Befestigungsstelle (16) eine Masthöhe $m_i$, die einen Abstand zwischen einer Oberlenkerkupplungsstelle (52) und einer Unterlenkerkupplungsstelle (54) zur Anbringung des landwirtschaftlichen Zusatz- oder Anbaugeräts (14) wiedergibt, zu ermitteln,

$$m_i = \sqrt{(M_{ix} - U_{kx})^2 + (M_{iz} - U_{kz})^2} \quad ,$$

mit

$$\begin{pmatrix} M_{ix} \\ M_{iz} \end{pmatrix} = \begin{pmatrix} O_{ix} \\ O_{iz} \end{pmatrix} + \hat{l}_o \begin{pmatrix} -\cos\beta \\ \sin\beta \end{pmatrix} \quad ,$$

$$\begin{pmatrix} U_{kx} \\ U_{kz} \end{pmatrix} = \begin{pmatrix} U_x \\ U_z \end{pmatrix} + l_u \begin{pmatrix} -\cos\alpha \\ \sin\alpha \end{pmatrix} \quad ,$$

wobei $M_{ix}$, $M_{iz}$ eine die Position einer Oberlenkerkupplungsstelle (52) repräsentierende Variable, $U_{kx}$, $U_{kz}$ die Position der Unterlenkerkupplungsstelle (54) und $O_{ix}$, $O_{iz}$ die Lagekoordinaten der i-ten Aufnahmebohrung an der traktorseitigen Befestigungsstelle (16) sind, wobei anschließend die Stellung des Hubarms (32) verändert und die Berechnung der Masthöhe $m_i$ von der Kontrolleinheit (68) für jede der möglichen Anbringungspositionen des Oberlenkers (18) an der traktorseitigen Befestigungsstelle (16) wiederholt wird, um aus der Menge der jeweils für die Masthöhe $m_i$ berechneten Ergebnisse diejenigen auszuwählen, die aufgrund ihrer Übereinstimmung auf die vom Oberlenker (18) belegte Aufnahmebohrung (24-1) an der traktorseitigen Befestigungsstelle (16) hinweisen.

4. Verfahren nach Anspruch 3, **dadurch gekennzeichnet, dass** für den Fall einer mehrdeutigen Lösung die Stellung des Hubarms (32) erneut verändert und die Berechnung der Masthöhe $m_i$ von der Kontrolleinheit (68) für jede der möglichen Anbringungspositionen des Oberlenkers (18) an der traktorseitigen Befestigungsstelle (16) ein weiteres Mal durchgeführt wird.

**5.** Verfahren nach Anspruch 3 oder 4, **dadurch gekennzeichnet, dass** ausgehend von der ermittelten Anbringungsposition des Oberlenkers (18) an der traktorseitigen Befestigungsstelle (16) von der Kontrolleinheit (68) als vierte Geometrie- und/oder Stellgröße der Betrag der zugehörigen Masthöhe $m_j$ ermittelt wird,

$$m_j = \sqrt{\left(M_{jx} - U_{kx}\right)^2 + \left(M_{jz} - U_{kz}\right)^2} \ \ .$$

**6.** Verfahren nach Anspruch 5, **dadurch gekennzeichnet, dass** der Oberlenker (18) in eine von der Endstellung abweichende Arbeitsposition verbracht wird, wobei von der Kontrolleinheit (68) als fünfte Geometrie- und/oder Stellgröße die Länge $l_o$ des Oberlenkers (18) in der Arbeitsposition durch Auflösen einer quadratischen Gleichung der Form

$$m_j^2 = \sqrt{\left(U_{kx} - O_{jx} + l_o \cos\beta\right)^2 + \left(U_{kz} - O_{jz} - l_o \sin\beta\right)^2} \ \ ,$$

mit

$$\begin{pmatrix} U_{kx} \\ U_{kz} \end{pmatrix} = \begin{pmatrix} U_x \\ U_z \end{pmatrix} + l_u \begin{pmatrix} -\cos\alpha \\ \sin\alpha \end{pmatrix} \ \ ,$$

$$\begin{pmatrix} O_{kx} \\ O_{kz} \end{pmatrix} = \begin{pmatrix} O_{jx} \\ O_{jz} \end{pmatrix} + l_o \begin{pmatrix} -\cos\beta \\ \sin\beta \end{pmatrix} \ \ ,$$

bestimmt wird, wobei $\alpha$ die Winkellage des Unterlenkers (20) sowie $\beta$ die Winkellage des Oberlenkers (18) jeweils gegenüber der Horizontalen, $U_{kx}$, $U_{kz}$ die Position der Unterlenkerkupplungsstelle (54) und $O_{jx}$, $O_{jz}$ die Lagekoordinaten der vom Oberlenker (18) belegten Aufnahmebohrung (24-1) an der traktorseitigen Befestigungsstelle (16) sind.

**7.** Verfahren nach wenigstens einem der vorhergehenden Ansprüche 1 bis 6, **dadurch gekennzeichnet, dass** die von der Kontrolleinheit (68) berechneten Stell- und/oder Geometriegrößen zur Erkennung möglicher Fehleinstellungen seitens eines Bedieners sowie zur Ausgabe von Einstellempfehlungen über eine mit der Kontrolleinheit (68) in Verbindung stehende Bedienerschnittstelle (72) herangezogen werden.

**Claims**

**1.** Method for calculating characteristic geometry variables and/or actuating variables of a three-point hydraulic lift of an agricultural tractor, in which, as a first geometry variable and/or actuating variable, an electronic monitoring unit (68) acquires a mounting position of a lifting strut (30), which can be adjusted by means of a lifting arm (32), in one of a plurality of receiving drilled holes (36-1, 36-2) which are formed in a lower link (20) which can be pivoted by means of the lifting strut (30), in that the lower link (20) is firstly moved into a horizontal angular position $\alpha = 0$ by actuating a hydraulic controller of the agricultural tractor (10), and a position $P_x$, $P_z$ of the lifting arm (32) which corresponds thereto is sensed with respect to the vertical by means of a position sensor (66), and an angular position $\gamma$ of the lifting strut (30) which corresponds thereto is also sensed with respect to the vertical by means of an associated acceleration and/or rotational speed sensor (62), wherein the monitoring unit (68) for determining the mounting position of the lifting strut (30) at the lower link (20) determines for which of the receptacle drilled holes (36-1, 36-2) a geometric compulsory condition of the form

$$\begin{pmatrix} U_{ix} \\ U_{iz} \end{pmatrix} = \begin{pmatrix} P_x \\ P_z \end{pmatrix} - a \begin{pmatrix} \sin\gamma \\ \cos\gamma \end{pmatrix}$$

is satisfied in which $U_{ix}$, $U_{iz}$ denote the positional coordinates of the i-th receptacle drilled hole and a denotes a variable representing the length of the lifting strut (30).

2.  Method according to Claim 1, **characterized in that** the lifting strut (30) is embodied in a longitudinally adjustable fashion, wherein the monitoring unit (68) determines the instantaneous length $l_h$ of the lifting strut (30) on the basis of the acquired mounting position of the lifting strut (30) at the lower link (20) as a second geometry variable and/or actuating variable, for which purpose the positional coordinates $U_{jx}$, $U_{jz}$ of the receptacle drilled hole (36-2) which are identified as occupied are inserted into the geometric compulsory condition by the monitoring unit (68), in order to subsequently resolve said compulsory condition according to the variable a, where a = $l_h$.

3.  Method according to Claim 1 or 2, **characterized in that**, as a third geometry variable and/or actuating variable, the control unit (68) acquires a mounting position of a longitudinally adjustable upper link (18) in one of a plurality of receptacle drilled holes (24-1, 24-2, 24-3) of a tractor-side attachment point (16), for which purpose when there is a mounted agricultural auxiliary device or attachment (14) the upper link (18) is firstly moved into one of its two end positions, and by means of associated acceleration and/or rotational speed sensors (58, 60) on the one hand the angular position $\alpha$ of the lower link (20) and on the other hand an angular position $\beta$ of the upper link (18) are respectively acquired with respect to the horizontal in order to acquire, on the basis of a length $l_o = \hat{l}_o$, present in the end position, of the upper link (18), a length $l_u$ of the lower link (20) and a position $U_x$, $U_z$ of a tractor-side coupling point (70) of the lower link (20) for each of the possible mounting positions of the upper link (18) at the tractor-side attachment point (16), a mast height $m_i$ which represents a distance between an upper link coupling point (52) and a lower link coupling point (54) for the mounting of the agricultural auxiliary device or attachment (14),

$$m_i = \sqrt{(M_{ix} - U_{kx})^2 + (M_{iz} - U_{kz})^2} \; ,$$

with

$$\begin{pmatrix} M_{ix} \\ M_{iz} \end{pmatrix} = \begin{pmatrix} O_{ix} \\ O_{iz} \end{pmatrix} + \hat{l}_o \begin{pmatrix} -\cos\beta \\ \sin\beta \end{pmatrix} \; ,$$

$$\begin{pmatrix} U_{kx} \\ U_{kz} \end{pmatrix} = \begin{pmatrix} U_x \\ U_z \end{pmatrix} + l_u \begin{pmatrix} -\cos\alpha \\ \sin\alpha \end{pmatrix} \; ,$$

where $M_{ix}$, $M_{iz}$ are a variable representing the position of an upper link coupling point (52), $U_{kx}$, $U_{kz}$ are the position of the lower link coupling point (54), and $O_{ix}$, $O_{iz}$ are the positional coordinates of the i-th receptacle drilled hole at the tractor-side attachment point (16), wherein the position of the lifting arm (32) is subsequently changed, and the calculation of the mast height $m_i$ is repeated by the monitoring unit (68) for each of the possible mounting positions of the upper link (18) at the tractor-side attachment point (16), in order to select from the set of the results which are respectively calculated for the mast height $m_i$ those results which indicate, on the basis of their correspondence, the receptacle drilled hole (24-1), occupied by the upper link (18), at the tractor-side attachment point (16).

4.  Method according to Claim 3, **characterized in that** for the case of an ambiguous solution the position of the lifting arm (32) is changed again and the calculation of the mast height $m_i$ is carried out a further time by the monitoring unit (68) for each of the possible mounting positions of the upper link (18) at the tractor-side attachment point (16).

5.  Method according to Claim 3 or 4, **characterized in that**, on the basis of the acquired mounting position of the upper link (18) at the tractor-side attachment point (16), the monitoring unit (68) acquires, as a fourth geometry variable and/or actuating variable, the absolute value of the associated mast height $m_j$

$$m_j = \sqrt{(M_{jx} - U_{kx})^2 + (M_{jz} - U_{kz})^2} \; .$$

6.  Method according to Claim 5, **characterized in that** the upper link (18) is moved into a working position which differs from the end position, wherein the monitoring unit (68) determines, as a fifth geometry variable and/or actuating variable, the length $l_o$ of the upper link (18) in the working position by resolving a quadratic equation of the form

$$m_j^2 = \sqrt{(U_{kx} - O_{jx} + l_o \cos\beta)^2 + (U_{kz} - O_{jz} - l_o \sin\beta)^2} \; ,$$

with

$$\begin{pmatrix} U_{kx} \\ U_{kz} \end{pmatrix} = \begin{pmatrix} U_x \\ U_z \end{pmatrix} + l_u \begin{pmatrix} -\cos\alpha \\ \sin\alpha \end{pmatrix} \quad ,$$

$$\begin{pmatrix} O_{kx} \\ O_{kz} \end{pmatrix} = \begin{pmatrix} O_{jx} \\ O_{jz} \end{pmatrix} + l_o \begin{pmatrix} -\cos\beta \\ \sin\beta \end{pmatrix} \quad ,$$

where $\alpha$ is the angular position of the lower link (20) and $\beta$ is the angular position of the upper link (18), in each case with respect to the horizontal, $U_{kx}$, $U_{kz}$ are the position of the lower link coupling point (54), and $O_{jx}$, $O_{jz}$ are the positional coordinates of the receptacle drilled hole (24-1), occupied by the upper link (18), at the tractor-side attachment point (16).

7. Method according to at least one of the preceding Claims 1 to 6, **characterized in that** the actuating variables and/or or geometry variables which are calculated by the monitoring unit (68) are used to detect possible incorrect settings by an operator and to output setting recommendations via an operator interface (72) which is connected to the monitoring unit (68).

## Revendications

1. Procédé de calcul de grandeurs de réglage et/ou de géométrie caractéristiques d'un vérin à trois points d'un tracteur agricole, dans lequel une position de fixation d'un montant de levage (30), déplaçable au moyen d'un bras de levage (32), dans l'un des plusieurs trous de réception (36-1, 36-2) qui sont formés dans un bras inférieur (20) pouvant pivoter au moyen du montant de levage (30), est déterminée comme première grandeur de réglage et/ou de géométrie par une unité de commande électronique (68) par le fait que l'actionnement d'une commande hydraulique du tracteur agricole (10) permet de transférer le bras inférieur (20) tout d'abord dans une position angulaire horizontale $\alpha = 0$ et qu'un capteur de position (66) permet de détecter une position correspondante $P_x$, $P_z$ du bras de levage (32) et un capteur d'accélération et/ou de vitesse de rotation associé (62) permet de détecter une position angulaire correspondante $\gamma$ du montant de levage (30) par rapport à la verticale, l'unité de commande (68) déterminant, dans le but de déterminer la position de fixation du montant de levage (30) au bras inférieur (20), quels trous de réception (36-1, 36-2) satisfont à une condition de contrainte géométrique de la forme

$$\begin{pmatrix} U_{ix} \\ U_{iz} \end{pmatrix} = \begin{pmatrix} P_x \\ P_z \end{pmatrix} - a \begin{pmatrix} \sin\gamma \\ \cos\gamma \end{pmatrix}$$

dans laquelle $U_{ix}$, $U_{iz}$ désignent les coordonnées de position du i-ème trou de réception et a désigne une variable représentant la longueur du montant de levage (30) .

2. Procédé selon la revendication 1, **caractérisé en ce que** le montant de levage (30) est conçu pour être réglable en longueur, l'unité de commande (68) permettant de déterminer à partir de la position de fixation déterminée du montant de levage (30) au bras inférieur (20) la longueur instantanée $l_h$ du montant de levage (30) comme deuxième grandeur de réglage et/ou de géométrie, ce pour quoi les coordonnées de position $U_{jx}$, $U_{jz}$ du trou de réception (36-2) identifié comme occupé sont utilisées par l'unité de commande (68) dans la condition de contrainte géométrique pour résoudre ensuite celle-ci selon la variable a, avec a = $l_h$.

3. Procédé selon la revendication 1 ou 2, **caractérisé en ce que** l'unité de commande (68) détermine, comme troisième grandeur de réglage et/ou de géométrie, une position de fixation d'un bras supérieur (18) de longueur réglable dans l'un des plusieurs trous de réception (24-1, 24-2, 24-3) d'un point d'attache côté tracteur (16), ce pour quoi le bras supérieur (18) est transféré, lorsqu'il est équipé d'un appareil accessoire ou rapporté (14), dans l'une de ses deux positions d'extrémité et des capteurs d'accélération et/ou de vitesse de rotation associés (58, 60) déterminent d'une part la position angulaire $\alpha$ du bras inférieur (20) et d'autre part une position angulaire $\beta$ du bras supérieur (18) à chaque fois par rapport à l'horizontale pour déterminer, à partir d'une longueur en position d'extrémité $l_o = \hat{l}_o$ du bras supérieur (18), d'une longueur $l_u$ du bras inférieur (20) et d'une position $U_x$, $U_z$ d'un point d'articulation côté tracteur (70) du bras inférieur (20) pour chacune des positions de fixation possibles du bras supérieur (18) au point de fixation côté tracteur (16), une hauteur de mât $m_i$ qui représente une distance entre un point d'accouplement de bras supérieur (52) et un point d'accouplement de bras inférieur (54) pour la fixation de l'appareil accessoire ou rapporté (14),

$$m_i = \sqrt{(M_{ix} - U_{kx})^2 + (M_{iz} - U_{kz})^2} \quad ,$$

avec

$$\begin{pmatrix} M_{ix} \\ M_{iz} \end{pmatrix} = \begin{pmatrix} O_{ix} \\ O_{iz} \end{pmatrix} + \hat{1}_o \begin{pmatrix} -\cos\beta \\ \sin\beta \end{pmatrix} \quad ,$$

$$\begin{pmatrix} U_{kx} \\ U_{kz} \end{pmatrix} = \begin{pmatrix} U_x \\ U_z \end{pmatrix} + 1_u \begin{pmatrix} -\cos\alpha \\ \sin\alpha \end{pmatrix} \quad ,$$

$M_{ix}$, $M_{iz}$ étant une variable représentant la position d'un point d'accouplement de bras supérieur (52), $U_{kx}$, $U_{kz}$ étant la position du point d'accouplement de bras inférieur (54) et $O_{ix}$, $O_{iz}$ étant les coordonnées de position du ième trou de réception au point d'accouplement côté tracteur (16), la position du bras de levage (32) étant ensuite modifiée et le calcul de la hauteur de mât $m_i$ par l'unité de commande (68) pour chacune des positions de fixation possibles du bras supérieur (18) au point de fixation côté tracteur (16) étant répété pour sélectionner dans l'ensemble des résultats calculés à chaque fois pour la hauteur de mât $m_i$ ceux qui indiquent, en raison de leur cohérence, le trou de réception (24-1) occupé par le bras supérieur (18) au point de fixation côté tracteur (16).

4. Procédé selon la revendication 3, **caractérisé en ce que** dans le cas d'une solution ambiguë, la position du bras de levage (32) est encore modifiée et le calcul de la hauteur de mât $m_i$ par l'unité de commande (68) pour chacune des positions de fixation possibles du bras supérieur (18) au point de fixation côté tracteur (16) est effectué encore une fois.

5. Procédé selon la revendication 3 ou 4, **caractérisé en ce que** la valeur de la hauteur de mât $m_j$ associée est déterminée par l'unité de commande (68) comme quatrième grandeur de réglage et/ou de géométrie à partir de la position de fixation déterminée du bras supérieur (18) au point de fixation côté tracteur (16),

$$m_j = \sqrt{\left(M_{jx} - U_{kx}\right)^2 + \left(M_{jz} - U_{kz}\right)^2} \quad .$$

6. Procédé selon la revendication 5, **caractérisé en ce que** le bras supérieur (18) est transféré dans une position de travail différente de la position d'extrémité, l'unité de commande (68) déterminant comme cinquième grandeur de réglage et/ou de géométrie la longueur $l_o$ du bras supérieur (18) dans la position de travail par résolution d'une équation quadratique de la forme,

$$m_j^2 = \sqrt{\left(U_{kx} - O_{jx} + l_o \cos\beta\right)^2 + \left(U_{kz} - O_{jz} - l_o \sin\beta\right)^2} \quad ,$$

avec

$$\begin{pmatrix} U_{kx} \\ U_{kz} \end{pmatrix} = \begin{pmatrix} U_x \\ U_z \end{pmatrix} + 1_u \begin{pmatrix} -\cos\alpha \\ \sin\alpha \end{pmatrix} \quad ,$$

$$\begin{pmatrix} O_{kx} \\ O_{kz} \end{pmatrix} = \begin{pmatrix} O_{jx} \\ O_{jz} \end{pmatrix} + l_o \begin{pmatrix} -\cos\beta \\ \sin\beta \end{pmatrix} \quad ,$$

$\alpha$ étant la position angulaire du bras inférieur (20) et $\beta$ étant la position angulaire du bras supérieur (18) à chaque fois par rapport à l'horizontale, $U_{kx}$, $U_{kz}$ étant la position du point d'accouplement de bras inférieur (54) et $O_{jx}$, $O_{jz}$ les coordonnées de position du trou de réception (24-1) occupé par le bras supérieur (18) au point de fixation côté tracteur (16).

7. Procédé selon l'une au moins des revendications précédentes 1 à 6, **caractérisé en ce que** les grandeurs de réglage et/ou de géométrie calculées par l'unité de commande (68) sont utilisées pour détecter d'éventuels réglages incorrects par un opérateur et pour délivrer des recommandations de réglage par le biais d'une interface utilisateur (72) associée à l'unité de commande (68).

FIG. 1

FIG. 2

EP 3 311 639 B1

FIG. 3

$l_{o,max}$

$l_{o,min}$

Z

X ← ↙ Y

12

18

ß

10

14

$l_h$

$m_1$

20

$l_u$

ß

$l_{o,min}$

$l_{o,max}$

$l_o$

FIG. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10350651 B3